# FASCICULE DE BREVET EUROPEEN

(11) **EP 2 097 306 B1**
(45) Date de publication et mention de la délivrance du brevet: **10.03.2010**
(21) Numéro de dépôt: 07848290.8
(22) Date de dépôt: 26.09.2007
(51) Int. Cl.: B62B 3/00, A47B 31/00, A47B 46/00

(54) **CHARIOT DE SERVICE DE CHAMBRE POUR LES HÔTELS**
ZIMMERSERVICEWAGEN FÜR HOTELS
ROOM SERVICE TROLLEY FOR HOTELS

(30) Priorité: 03.10.2006 FR 0608649
(43) Date de publication de la demande: 09.09.2009
(73) Titulaire: CADDIE, 67301 Schiltigheim (FR)
(72) Inventeur: DEPPEN-Joseph, Alice, F-67300 Schiltigheim (FR); LE MARCHAND, Alain, F-67116 Reichstett (FR)
(74) Mandataire: Laget, Jean-Loup
(86) Numéro de dépôt international: PCT/FR2007/001577
(87) Numéro de publication internationale: WO 2008/040862

(56) Documents cités:
- EP-A- 0 901 952
- WO-A-2008/009933
- DE-A- 19 524 130
- FR-A- 2 519 925
- FR-A1- 2 596 717
- GB-A- 1 522 774
- US-A- 2002 130 598

## Description

L'invention concerne les chariots de service de chambre pour les hôtels. Les chariots connus de ce type sont généralement construits autour d'un châssis de forme parallélépipédique composé de deux longerons parallèles définissant deux grands côtés et de deux traverses parallèles reliant les longerons et définissant deux petits côtés du chariot. Pour rigidifier le chariot, le châssis du chariot comporte également généralement deux entretoises s'étendant le long des diagonales du châssis en se croisant pour être fixées dans les angles du châssis.

Le châssis du chariot de service de chambre est équipé de quatre roulettes, en général deux fixes et deux pivotantes. Ces roulettes sont d'un diamètre important, de l'ordre de 160 à 200 mm, afin que le chariot puisse circuler sur des moquettes épaisses sans imposer à son utilisateur des efforts trop importants. Le châssis porte un caisson, fermé ou non, muni de plusieurs niveaux d'étagères, quatre ou cinq en général, qui permettent de stocker le linge propre nécessaire pour la réfection des chambres. De part et d'autre du caisson sont disposés des supports pour deux sacs amovibles, l'un destiné à recevoir le linge sale et l'autre le contenu des poubelles. Le dessus du caisson peut recevoir un plateau compartimenté pour les produits d'accueil (savons, shampoings, cirage, etc.).

Différents modèles de ces chariots de service de chambre sont proposés en fonction de leur capacité, la gamme allant généralement de 8 jusqu'à 18 chambres. Pour les plus grands modèles, le poids en charge peut aller jusqu'à 150 kg.

Les documents GB-A-1 522 774, FR-A1-2 596 717 et FR-A-2 519 925 décrivent des chariots de service de chambre selon le préambule de la revendication 1.

Les chariots de service de chambre connus présentent cependant les inconvénients ci-après :
- ils sont lourds et de ce fait difficilement maniables dans les couloirs étroits d'hôtel,
- ils transportent en même temps du linge propre, du linge sale et des déchets qui restent visibles et affectent l'image des établissements hôteliers vis-à-vis de leur clientèle.

L'invention vise à remédier à ces inconvénients et à procurer un chariot de service de chambre comme décrit ci-dessus qui, tout en conservant toutes les fonctionnalités habituelles de ce genre de chariot, offre une maniabilité accrue et une grande souplesse d'utilisation en intégrant les contraintes nouvelles de traitement séparé du linge propre et du linge sale, et en assurant qu'en position d'attente le linge, qu'il soit propre ou sale, ainsi que les déchets, ne soient pas exposés à la vue de la clientèle passant dans les couloirs.

A cet effet, l'invention concerne un chariot de service de chambre selon la revendication 1.

Grâce à cette disposition, le chariot n'est pratiquement déplaçable qu'en position fermée de sorte que le contenu du caisson n'est pas exposé à la vue de la clientèle passant dans les couloirs.

Selon d'autres caractéristiques de l'invention:
- une ligne joignant les axes de pivotement desdites quatrième et cinquième roulettes est sensiblement parallèle audit deuxième grand côté en position de parallélépipède fermé du châssis;
- ledit axe vertical est disposé dans un des quatre angles dudit parallélépipède, et que ledit premier grand côté et ledit deuxième petit côté dudit parallélépipède situés de part et d'autre dudit axe vertical sont dans le prolongement l'un de l'autre lorsque le châssis se trouve dans sa position ouverte;
- lesdites roulettes aux quatre angles dudit parallélépipède sont fixées sur lesdites entretoises portées par le châssis;
- la partie dormante du châssis est constituée par ledit premier grand côté, ledit premier petit côté, et une partie sensiblement égale au tiers de la longueur dudit deuxième grand côté, la partie ouvrante dudit châssis étant constituée par ledit deuxième petit côté et la partie restante dudit deuxième grand côté;
- lesdits panneaux verticaux sont fixés sur des montants portés par le châssis, deux des montants étant adjacents audit premier grand côté respectivement audit deuxième petit côté et assemblés entre eux par des moyens de charnière;
- toutes les roulettes sont de type pivotant;
- lesdits moyens de rangement comportent des étagères fixées respectivement à la partie ouvrante et à la partie donnante du châssis de manière à pouvoir se superposer entre elles lorsque le caisson est fermé;
- les étagères comportent une retenue verticale;
- lesdits moyens de rangement comportent dans ladite partie ouvrante un support de sac à linge et une étagère basse, et ladite partie dormante reçoit des boîtes basculantes et des bacs;

Selon un mode particulier de réalisation, en vue de respecter les contraintes de traitement séparé du linge propre et du linge sale, deux chariots de dimensions réduites sont attelés entre eux pour former un ensemble manoeuvrable, le caisson d'un premier chariot étant agencé pour recevoir le linge propre et le caisson du deuxième étant agencé pour recevoir le linge sale et/ou les déchets.

Dans ce but, le châssis comporte des moyens d'attelage de deux chariots entre eux pour former un ensemble manoeuvrable.

L'invention concerne également un ensemble de deux chariots de service de chambre tels que définis ci-dessus, dans lequel le caisson d'un premier chariot est agencé pour recevoir le linge propre et le caisson du second est agencé pour recevoir le linge sale et/ou les déchets.

D'autres caractéristiques et avantages de l'invention ressortiront de la description qui va suivre d'exemples de réalisations de chariots de service de chambre conformes à l'invention en relation avec les figures annexées dans lesquelles :
- La figure 1 est une vue de dessus d'un châssis de chariot en deux parties conforme à l'invention en position fermée, la cinématique d'ouverture du châssis et donc du chariot étant représentée en traits pointillés ;
- La figure 2 est une vue schématique en élévation d'un premier exemple de réalisation d'un chariot selon l'invention comportant le châssis de la figure 1, en position ouverte ;
- La figure 3 est une vue schématique en élévation d'un deuxième exemple de réalisation d'un chariot selon l'invention comportant le châssis de la figure 1, en position ouverte ;
- La figure 4 est une vue de dessus analogue à celle de la figure 1, montrant des moyens d'attelage entre deux chariots ;
- La figure 5 est une vue schématique en élévation d'un deuxième exemple de réalisation d'un chariot selon l'invention comportant le châssis de la figure 1, en position fermée ;
- La figure 6 est une vue de dessous du chariot de la figure 5 comportant un châssis de chariot en deux parties conforme à l'invention, en position fermée ;
- La figure 7 est une vue de dessous du chariot de la figure 5 comportant un châssis de chariot en deux parties conforme à l'invention, en position ouverte ; et
- La figure 8 est une vue schématique en élévation du chariot de la figure 5, en position ouverte.

Dans les exemples représentés aux figures, les éléments identiques ou similaires portent les mêmes références.

Le chariot est composé d'un châssis 1 et d'un caisson 10 monté sur celui-ci. Le châssis 1 est constitué de tubes métalliques qui dans les exemples illustrés sont de section carrée, et qui peuvent être protégés par une couche de revêtement comme une peinture époxy.

Vu en plan de dessus, le châssis forme de manière classique un parallélépipède comportant un premier grand côté 1a, un deuxième grand côté 1b, un premier petit côté 1c, et un deuxième petit côté 1d formant ainsi ensemble un parallélépipède fermé.

Selon l'invention, le châssis est composé d'une partie dormante 2 et d'une partie ouvrante 3. La partie dormante 2 du châssis est dans les exemples illustrés sur les figures constituée par le premier grand côté 1a, le premier petit côté 1c et une partie sensiblement égale au tiers de la longueur du deuxième grand côté 1b. La partie ouvrante 3 du châssis est constituée par le deuxième petit côté 1d et les sensiblement deux tiers restants du deuxième grand côté 1b. Ainsi, la partie dormante 2 du châssis 1 présente globalement une forme en J, alors que sa partie ouvrante 3 présente globalement une forme en L.

La partie ouvrante 3 du châssis 1 est articulée autour d'un axe vertical A-A sur la partie dormante 2 à l'aide de moyens d'articulation comprenant une charnière 3a. Ces moyens d'articulation sont de préférence disposés dans un angle du châssis ou à proximité d'un angle.

La partie dormante 2 est rigidifiée par deux moyens de rigidification sous forme d'entretoises, l'une (4) disposée dans l'angle entre le premier grand côté 1a et 1e premier petit côté 1c, l'autre (5) disposée entre l'extrémité libre du premier grand côté 1a et l'angle entre le premier petit côté 1c et la partie adjacente du deuxième grand côté 1b.

La partie ouvrante 3 comporte un moyen de rigidification sous forme d'une entretoise 6 disposée dans l'angle entre la partie restante du deuxième grand côté 1b et le deuxième petit côté 1d. Près de son extrémité libre, cette partie restante du deuxième grand côté 1b porte un étrier 7 pour la fixation d'une roulette pivotante 8a.

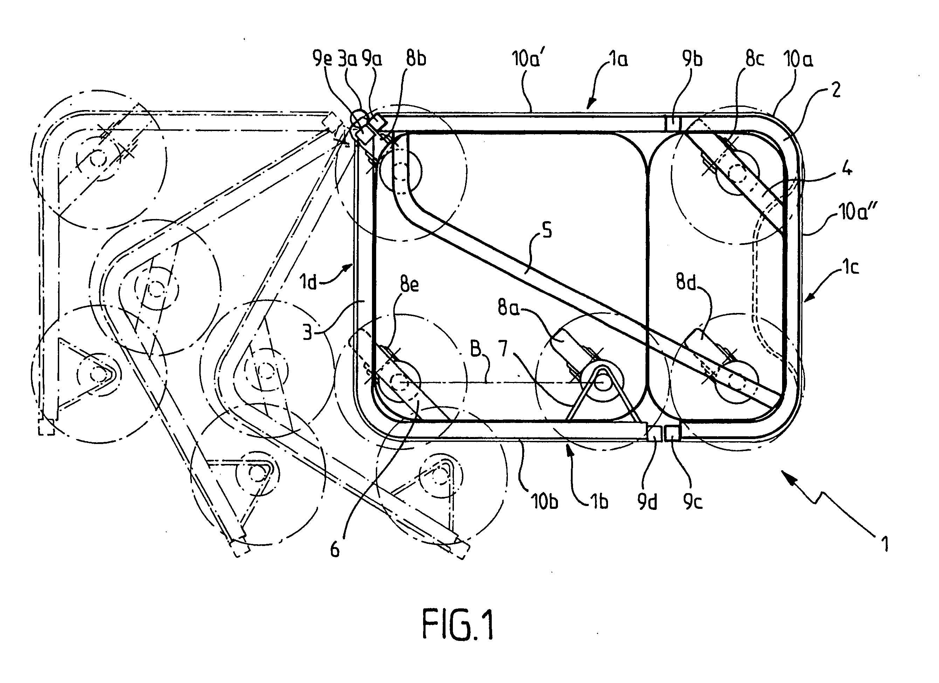

Quatre autres roulettes pivotantes 8b, 8c, 8d, 8e sont fixées sur châssis 1, sensiblement aux quatre angles du parallélépipède. Les trois roulettes pivotantes 8b, 8c et 8d d'angle sont fixées sur la partie dormante 2 du châssis. Plus précisément, les roulettes pivotantes 8b et 8d sont dans les exemples illustrés fixées sur l'entretoise 5, à proximité des extrémités de celle-ci, alors que la roulette pivotante 8c et fixée sur l'entretoise d'angle 4. La quatrième roulette d'angle 8e est fixée sur la partie ouvrante 3 du châssis, sur l'entretoise d'angle 6 comme cela est clairement montré à la figure 1.

Une ligne B joignant les axes de pivotement de la quatrième roulette d'angle 8a et de la cinquième roulette 8a est sensiblement parallèle au deuxième grand côté 1b en position de parallélépipède fermé du châssis.

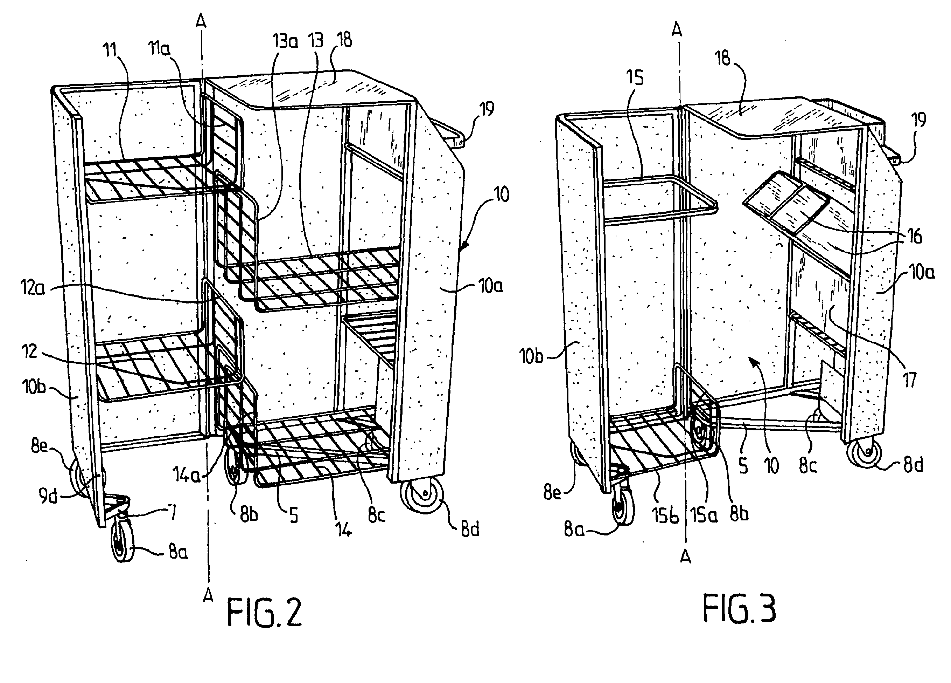

La partie ouvrante 3 du châssis 1 peut ainsi pivoter entre une position de parallélépipède fermé du châssis, et une position de parallélépipède ouvert dans laquelle un parallélépipède plus grand est défini par les parties dormante et ouvrante du châssis. Ce parallélépipède plus grand est ouvert du deuxième grand côté 1b pour donner accès à des moyens de rangement disposés à l'intérieur du chariot et qui seront décrits plus et détail en références aux figures 2 et 3.

Selon une variante non illustrée sur les figures, deux (8c, 8d) des roulettes d'angle sont fixées sur la partie dormante 2 du châssis, alors que les deux autres roulettes d'angle (8b, 8e) sont fixées sur la partie ouvrante 3 du châssis, sans pour autant sortir du cadre de l'invention.

Le châssis 1 porte cinq montants tubulaires 9a, 9b, 9c, 9d, 9e sur lesquels sont fixés un premier panneau 10a et un deuxième panneau 10b formant le caisson 10 du chariot.

Le panneau 10a est dans l'exemple illustré aux figures 1 à 4 en deux pièces 10a', 10a" dont la première (10a') est une pièce rectiligne fixée à ses extrémités aux montants 9a et 9b, alors que la deuxième partie (10a") est une pièce en C également fixée à l'une de ses extrémités au montant 9b et à l'autre extrémité, son extrémité libre, au montant 9c. Les deux pièces 10a', 10a" présentent ensemble une forme correspondant à celle de la partie dormante 2 du châssis 1. Dans la pièce 10a', le montant 9b fixé sur le premier grand côté 1a de la partie dormante 2 du châssis se trouve ainsi en alignement avec le montant 9a sur ce même grand côté 1a.

Le panneau 10b est à son extrémité libre fixé au montant 9d et à son extrémité opposée fixé au montant 9e et présente une forme en L correspondant à celle de la partie ouvrante 3 du châssis 1.

Les deux montants 9a, 9e adjacents à la jonction entre le premier grand côté 1a et 1e deuxième petit côté 1d sont assemblés entre eux par des moyens d'articulation formés par une charnière 3a. Les deux montants 9c, 9d disposés aux deux extrémités libres des deux parties du deuxième grand côté 10b peuvent avantageusement être équipés de moyens de fermeture. Par exemple l'extrémité haute du montant 9d peut porter un verrou (non représenté) dont le pêne s'engage dans une ouverture adjacente du montant 9c.

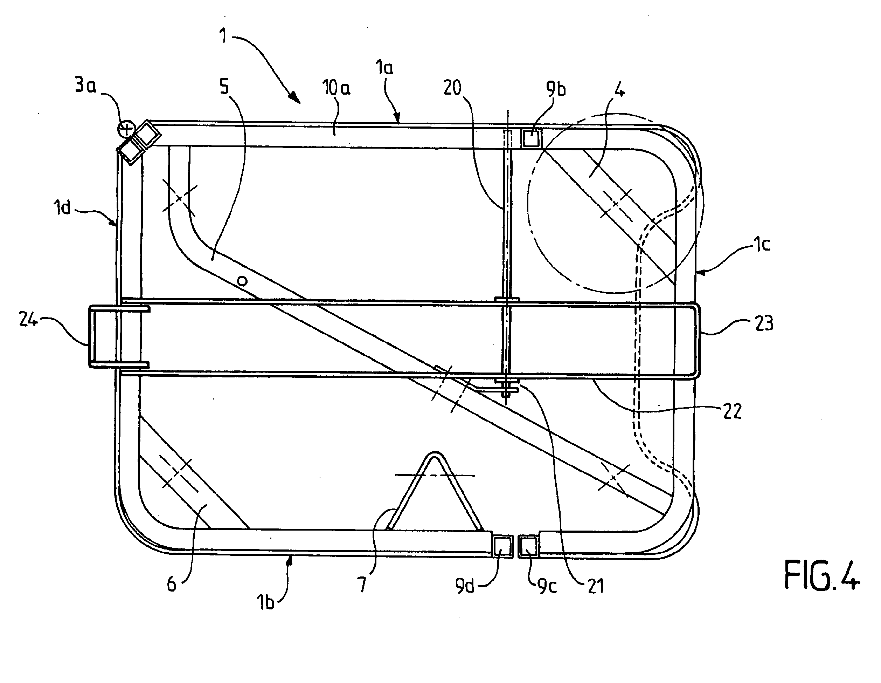

On voit sur les figures 2 et 3 qu'en position ouverte, le deuxième petit côté 1d de la partie ouvrante 3 du châssis 1 vient en prolongement du premier grand côté 1a de la partie dormante 2, ce qui permet de déployer tous les éléments internes du caisson, qui seront décrits plus en détail en relation avec les figures 3 et 4, d'une manière très accessible pour l'utilisateur. Les deux roulettes de la partie ouvrante 3 du châssis 1, à savoir la cinquième roulette 8a fixée à l'étrier 7 disposé près de l'extrémité libre de la partie restante du deuxième grand côté 1b et surtout la roulette 8e fixée à l'entretoise d'angle 6, facilitent le déploiement et le maintien en équilibre de la partie ouvrante 3 du châssis et de la partie 10b du caisson 10 qu'il porte.

L'intérieur du caisson 10 est agencé en fonction de la nature des matériels qu'il doit accueillir.

Pour un caisson 10 destiné au transport du linge propre, tel que celui illustré sur la figure 2, des moyens de rangement sous forme d'étagères 11, 12, 13, 14 sont fixées respectivement sur les parties 10b, 10a du caisson 10 portées par la partie ouvrante 3 respectivement la partie dormante 2 de manière à pouvoir se superposer entre elles lorsque le châssis 1, et avec lui le caisson 10, est fermé comme illustré avec des traits pleins à la figure 1. Avantageusement, les étagères sont fixées sur les petits côtés des parois des deux parties 10a, 10b du caisson 10 et comportent une retenue verticale 11a, 12b, 13a, 14a qui évite tout problème de coincement lors de l'ouverture ou de la fermeture du chariot. Avantageusement, ces étagères sont réalisées sous forme de grilles en fil d'acier.

Pour un caisson 10 destiné au transport du linge sale et des déchets, tel que celui illustré sur la figure 3, la partie ouvrante 10b du caisson est équipée des moyens de rangement sous forme d'un support de sac à linge 15 et d'une étagère basse 15b qui, comme les étagères 11 à 14 est avantageusement réalisée en forme de grille en fil d'acier et comporte une retenue verticale 15a, tandis que la partie dormante 10a du caisson reçoit d'autres moyens de rangement sous forme de boîtes basculantes 16 pour les produits d'entretien et les chiffons et de bacs 17 pour le tri sélectif des déchets (verre, plastiques, papiers).

Une plaque supérieure 18 est fixée aux montants 9a, 9b, 9c de la partie dormante 10a du caisson 10 afin d'assurer la fermeture du côté supérieur du caisson.

Le petit côté du caisson 10 porté par le premier petit côté 1c du châssis 1 est pourvu d'une poignée de manoeuvre 19.

Comme on le voit, l'invention permet de répartir sur deux unités spécialisées les fonctions d'un chariot de service de chambre, ce qui du fait de l'encombrement et du poids moindre de chaque unité procure une maniabilité très sensiblement améliorée lors de l'usage de ces unités dans les chambres. Pour assurer que le déplacement dans les couloirs des deux types de caissons roulants ci-dessus puisse être effectué simultanément et aisément par une seule personne, l'invention prévoit que lesdits caissons sont munis de moyens d'attelage entre eux.

La figure 4 montre un exemple de réalisation de tels moyens d'attelage. Un axe de rotation 20 est fixé entre le grand côté la du châssis 1 et une patte 21 portée par l'entretoise 5. Sur cet axe est articulé un levier 22 qui s'étend sensiblement sur toute la longueur du châssis 1, dont l'extrémité arrière forme un moyen de pédale 23 et dont l'extrémité avant porte un crochet 24 qui fait saillie à l'extérieur du deuxième petit côté 1d du châssis et qui est destiné à venir en prise avec le premier petit côté 1c du châssis d'un autre caisson.

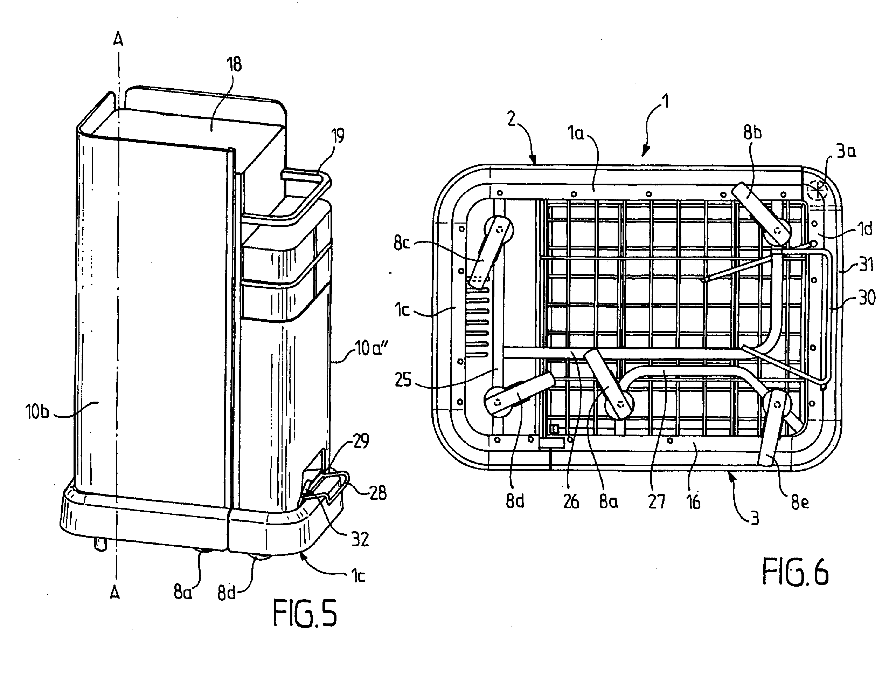

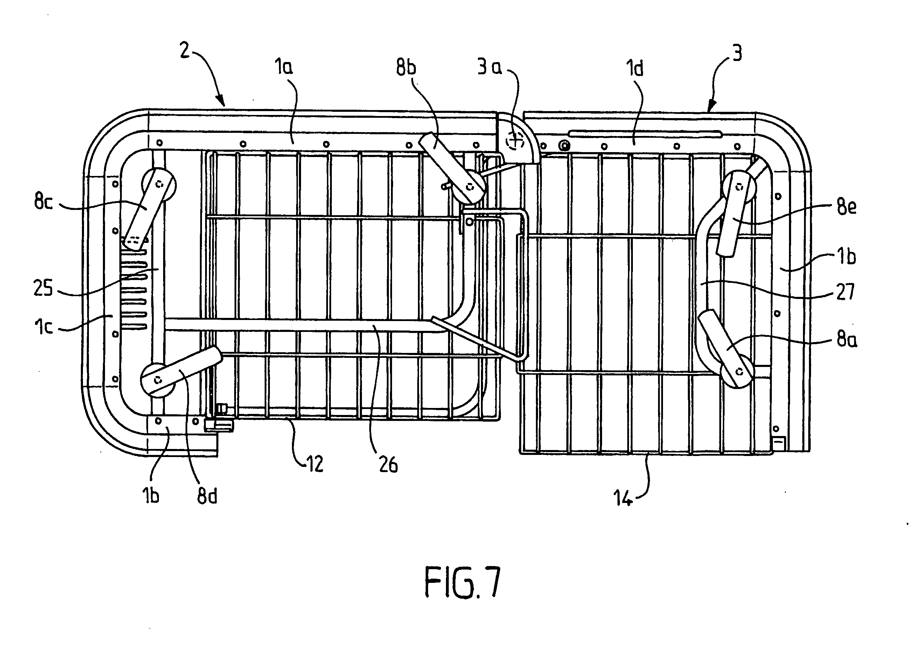

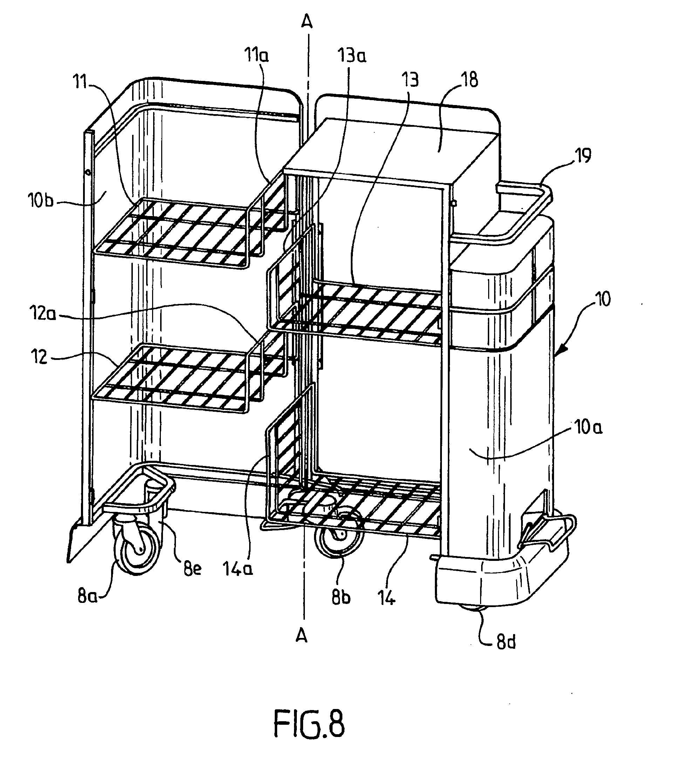

Les figures 5 à 8 montre un autre exemple d'un chariot de service de chambre selon l'invention. Ce chariot est comme le chariot illustré à la figure 2 équipé d'étagères 11, 12, 13 et 14 superposables les unes au-dessus des autres lorsque le caisson 10 est fermé comme illustré aux figures 5 et 6.

Dans cet exemple, les roulettes pivotantes 8c et 8d de la partie dormante 2 du châssis 1 sont fixées sur un organe de rigidification sous forme d'une entretoise 25 s'entendant sensiblement transversalement en reliant le premier grand côté la au à la partie du deuxième grand côté 1b de la partie dormante 2 du châssis 1. La troisième roulette 8b est fixée sur une deuxième entretoise en L 26 qui relie le premier grand côté 1a du châssis à l'entretoise 25, perpendiculairement à celle-ci.

Les roulettes pivotantes 8a et 8e de la partie ouvrante 2 du châssis 1 sont fixées sur une troisième entretoise 27 s'étendant de l'angle entre le deuxième petit côté 1d de la partie ouvrante 3 du châssis 1 et la partie du deuxième grand côté 1b du châssis qui se trouve sur la partie ouvrante de celui-ci. La deuxième entretoise 26 s'étend dans le sens longitudinal du chariot, et sur pratiquement toute la longueur de celle-ci. La troisième entretoise 27 s'étend également pour sa plus grande partie, lorsque le chariot est fermé, dans le sens longitudinal de celui-ci et est alors disposée sensiblement parallèlement à la deuxième entretoise 26 de manière à facilement faire entrer les roulettes 8a et 8e à l'intérieur du contour du chariot.

La figure 5 montre en outre un autre exemple de réalisation des moyens d'attelage entre deux chariots. Ces moyens comprennent un crochet 28 faisant saillie hors du contour du chariot en étant monté sur un axe rotatif 29 à proximité du premier petit côté 1c du châssis 1. L'axe rotatif 29 s'étend transversalement au chariot et est précontraint vers le bas par un moyen élastique (non représenté) afin de venir s'accrocher derrière une tige 30 d'extension transversale disposée dans une ouverture 31 en bas de l'autre chariot.

Le crochet 28 peut être commandé à l'aide d'un moyen de pédale 32 relié à l'axe rotatif 29.

## Revendications

1. Chariot de service de chambre comportant un châssis parallélépipédique roulant (1) rigidifié par des entretoises (4, 5, 6; 25, 26, 27) et comprenant un premier grand côté (1a), un deuxième grand côté (1b), un premier petit côté (1c), et un deuxième petit côté (1d) formant ensemble un parallélépipède fermé, des roulettes (8b à 8e) fixées aux quatre angles du parallélépipède formé par le châssis (1), et un caisson (10) constitué par des panneaux verticaux (10a, 10b) portés par ledit châssis et équipés de moyens de rangement disposés à l'intérieur du caisson (10), **caractérisé en ce que** ledit châssis (1) est constitué d'une partie dormante (2) portant un premier panneau vertical (10a) et sur laquelle sont fixées au moins deux desdites quatre roulettes, et d'une partie ouvrante en forme de L (3) portant un deuxième panneau vertical (10b) et sur laquelle est fixée au moins la quatrième (8e) desdites quatre roulettes, ainsi qu'une cinquième roulette (8a) fixée à proximité d'une extrémité libre de ladite partie ouvrante en L, la partie dormante et la partie ouvrante étant articulées entre elles autour d'un axe vertical (A-A) disposé sur la périphérie du châssis afin de permettre à ladite partie ouvrante (3) de pivoter entre une position de parallélépipède fermé du châssis (1), et une position de parallélépipède ouvert dans laquelle un parallélépipède plus grand est défini, ouvert dudit deuxième grand côté (1b) pour donner accès auxdits moyens de rangement disposés à l'intérieur du caisson.

2. Chariot de service de chambre selon la revendication 1, **caractérisé en ce qu'**une ligne (B) joignant les axes de pivotement desdites quatrième (8e) et cinquième (8a) roulettes est sensiblement parallèle audit deuxième grand côté (1b) en position de parallélépipède fermé du châssis (1).

3. Chariot de service de chambre selon la revendication 1 ou 2, **caractérisé en ce que** ledit axe vertical (A-A) est disposé dans un des quatre angles dudit parallélépipède, et que ledit premier grand côté (1a) et ledit deuxième petit côté (1d) dudit parallélépipède situés de part et d'autre dudit axe vertical (A-A) sont dans le prolongement l'un de l'autre lorsque le châssis (1) se trouve dans sa position de parallélépipède ouvert.

4. Chariot de service de chambre selon l'une quelconque des revendications précédentes, **caractérisé en ce que** lesdites roulettes (8a à 8d) aux quatre angles dudit parallélépipède sont fixées sur lesdites entretoises (4, 5; 25 à 27) portées par le châssis (1).

5. Chariot de service de chambre selon l'une quelconque des revendications précédentes, **caractérisé en ce que** la partie dormante (2) du châssis est constituée par ledit premier grand côté (1a), ledit premier petit côté (1c), et une partie sensiblement égale au tiers de la longueur dudit deuxième grand côté (1b), la partie ouvrante (3) dudit châssis (1) étant constituée par ledit deuxième petit côté (1d) et la partie restante dudit deuxième grand côté (1b).

6. Chariot de service de chambre selon l'une quelconque des revendications précédentes, **caractérisé en ce que** lesdits panneaux verticaux (10a, 10b) sont fixés sur des montants (9a, 9b, 9c, 9d, 9e) portés par le châssis (1), deux (9a, 9e) des montants étant adjacents audit premier grand côté (1a) respectivement audit deuxième petit côté (1d) et assemblés entre eux par des moyens de charnière (3 a).

7. Chariot de service de chambre selon l'une quelconque des revendications précédentes, **caractérisé en ce que** toutes les roulettes (8a à 8e) sont de type pivotant.

8. Chariot de service de chambre selon l'une quelconque des revendications précédentes, **caractérisé en ce que** lesdits moyens de rangement comportent des étagères (11 à 14) fixées respectivement à la partie ouvrante (3) et à la partie dormante (2) du châssis (1) de manière à pouvoir se superposer entre elles lorsque le caisson est fermé.

9. Chariot de service de chambre selon la revendication 8, **caractérisé en ce que** les étagères (11 à 14) comportent une retenue verticale (11a à 14a).

10. Chariot de service de chambre selon l'une quelconque des revendications 1 à 7, **caractérisé en ce que** lesdits moyens de rangement comportent dans ladite partie ouvrante (3) un support de sac à linge (15) et une étagère basse (16), et **en ce que** ladite partie dormante (2) reçoit des boîtes basculantes (16) et des bacs (17).

11. Chariot de service de chambre selon l'une quelconque des revendications précédentes, **caractérisé en ce que** le châssis (1) comporte des moyens d'attelage (20 à 24; 28 à 32) de deux chariots entre eux pour former un ensemble manoeuvrable.

12. Ensemble de deux chariots de service de chambre selon la revendication 11, **caractérisé en ce que** le caisson d'un premier chariot est agencé pour recevoir le linge propre et le caisson du second est agencé pour recevoir le linge sale et/ou les déchets.

## Claims

1. A room service trolley comprising a parallelepiped dolly (1) stiffened by struts (4, 5, 6; 25, 26, 27) and comprising a first large side (1a), a second large side (1b), a first small side (1c), and a second small side (1d) together forming a closed cube, casters (8b to 8e) mounted to the four corners of the cube formed by the dolly (1), and a casing (10) made up of vertical panels (10a, 10b) supported by said dolly and equipped with storage means arranged inside the casing (10), **characterized in that** said dolly (1) is made up of a sleeper portion (2) supporting a first vertical panel (10a) and on which at least two of said four casters are mounted, and an L-shaped opening portion (3) supporting a second vertical panel (10b) and on which at least the fourth (8e) of said four casters is mounted, as well as a fifth caster (8a) mounted near a free end of said L-shaped opening portion, the sleeper portion and the opening portion being hinged relative to each other around a vertical axis (A-A) arranged on the edge of the dolly in order to allow said opening portion (3) to pivot between a closed cube position of the dolly (1), and an open cube position in which a larger cube is defined, open from said second large side (1b) to provide access to said storage means arranged inside the casing.

2. The room service trolley according to claim 1, **characterized in that** a line (B) joining the pivot axes of said fourth (8e) and fifth (8a) casters is essentially parallel to said second large side (1b) in the closed cube position of the dolly (1).

3. The room service trolley according to claim 1 or 2, **characterized in that** said vertical axis (A-A) is arranged in one of the four corners of said cube, and that said first large side (1a) and said second small side (1d) of said cube situated on either side of said vertical axis (A-A) are in the extension of one another when the dolly (1) is in its open cube position.

4. The room service trolley according to any one of the preceding claims, **characterized in that** said casters (8a to 8d) at the four corners of said cube are mounted on said struts (4, 5; 25 to 27) supported by the dolly (1).

5. The room service trolley according to any one of the preceding claims, **characterized in that** the sleeper portion (2) of the dolly is made up of said first large side (1a), said first small side (1c), and a portion essentially equal to one third of the length of said second large side (1b), the opening portion (3) of said dolly (1) being formed by said second small side (1d) and the remaining portion of said second large side (1b).

6. The room service trolley according to any one of the preceding claims, **characterized in that** said vertical panels (10a, 10b) are mounted on posts (9a, 9b, 9c, 9d, 9e) supported by the dolly (1), two (9a, 9e) of the posts being adjacent to said first large side (1a), said second small side (1d), respectively, and assembled together by hinge means (3a).

7. The room service trolley according to any one of the preceding claims, **characterized in that** all of the casters (8a to 8e) are of the pivoting type.

8. The room service trolley according to any one of the preceding claims, **characterized in that** said storage means comprise shelves (11 to 14) respectively mounted to the opening portion (3) and the sleeper portion (2) of the dolly (1) so as to be able to superimpose each other when the casing is closed.

9. The room service trolley according to claim 8, **characterized in that** the shelves (11 to 14) comprise a vertical holding (11a to 14a) .

10. The room service trolley according to any one of claims 1 to 7, **characterized in that** said storage means comprise, in said opening portion (3), a laundry bag support (15) and a low shelf (16), and **in that** said sleeper portion (2) receives tilting boxes (16) and trays (17).

11. The room service trolley according to any one of the preceding claims, **characterized in that** the dolly (1) comprises hitching means (20 to 24; 28 to 32) for hitching two trolleys together to form a maneuverable assembly.

12. The assembly of two room service trolleys according to claim 11, **characterized in that** the casing of a first trolley is arranged to receive clean laundry and the casing of the second is arranged to receive dirty laundry and/or refuse.

## Patentansprüche

1. Zimmerservicewagen, einen rollenden parallelepipedischen Rahmen (1) umfassend, der durch Versteifungen (4, 5, 6; 25, 26, 27) verstärkt ist und eine erste große Seite (1a), eine zweite große Seite (1b), eine erste kleine Seite (1c) und eine zweite kleine Seite (1d) umfasst, die zusammen ein geschlossenes Parallelepiped bilden, Rollen (8b bis 8e), die an den vier Ecken des vom Rahmen (1) gebildeten Parallelepipeds befestigt sind und einen Behälter (10), der von vertikalen Platten (10a, 10b) gebildet wird, die vom Rahmen getragen werden und mit Aufbewahrungsmitteln ausgestattet sind, die im Behälter (10) angeordnet sind, **dadurch gekennzeichnet, dass** der Rahmen (1) aus einem starren Abschnitt (2) besteht, der eine erste vertikale Platte (10a) trägt und auf dem mindestens zwei der vier Rollen befestigt sind, und einem öffnenden Abschnitt in L-Form (3), der eine zweite vertikale Wand (10b) trägt und auf dem mindestens die vierte (8e) der vier Rollen befestigt ist, sowie eine fünfte Rolle (8a), die in der Nähe eines freien Endes des öffnenden Abschnitts in L-Form befestigt ist, wobei der starre Abschnitt und der öffnende Abschnitt aneinander um eine vertikale Achse (A-A) angelenkt sind, die auf dem Umfang des Rahmens angeordnet ist, um dem öffnenden Abschnitt (3) zu erlauben, zwischen einer geschlossenen Parallelepipedstellung des Rahmens (1) und einer geöffneten Parallelepipedstellung, in der ein größeres Parallelepided definiert wird, von der zweiten großen Seite (1b) geöffnet, zu schwenken, um Zugang zu den im Behälter angeordneten Aufbewahrungsmitteln zu erlauben.

2. Zimmerservicewagen nach Anspruch 1, **dadurch gekennzeichnet, dass** eine die Drehachsen der vierten (8e) und fünften (8a) Rolle verbindende Linie (B) in geschlossener Parallelepipedstellung des Rahmens (1) etwa parallel zur zweiten großen Seite (1b) ist.

3. Zimmerservicewagen nach Anspruch 1 oder 2, **dadurch gekennzeichnet, dass** die vertikale Achse (A-A) in einer der vier Ecken des Parallelepipeds angeordnet ist und dass die erste große Seite (1a) und die zweite kleine Seite (1d) des Parallelepipeds, die sich auf der einen und der anderen Seite der vertikalen Achse (A-A) befinden, in gegenseitiger Verlängerung sind, wenn sich der Rahmen (1) in seiner geöffneten Parallelepipedstellung befindet.

4. Zimmerservicewagen nach einem der vorangehenden Ansprüche, **dadurch gekennzeichnet, dass** die Rollen (8a bis 8d) an vier Ecken des Parallelepipeds auf den vom Rahmen (1) getragenen Versteifungen (4, 5; 25 bis 27) befestigt sind.

5. Zimmerservicewagen nach einem der vorangehenden Ansprüche, **dadurch gekennzeichnet, dass** der starre Abschnitt (2) des Rahmens von der ersten großen Seite (1a), der ersten kleinen Seite (1c) und einem Abschnitt gebildet wird, der etwa dem Drittel der Länge der zweiten großen Seite (1b) entspricht, wobei der öffnende Abschnitt (3) des Rahmens (1) von der zweiten kleinen Seite (1d) und dem restlichen Abschnitt der zweiten großen Seite (1b) gebildet wird.

6. Zimmerservicewagen nach einem der vorangehenden Ansprüche, **dadurch gekennzeichnet, dass** die vertikalen Platten (10a, 10b) an Streben (9a, 9b, 9c, 9d, 9e) befestigt sind, die vom Rahmen (1) getragen werden, wobei zwei (9a, 9e) der Streben der ersten großen Seite (1a) beziehungsweise der zweiten kleinen Seite (1d) benachbart sind und untereinander durch Scharniermittel (3a) verbunden sind.

7. Zimmerservicewagen nach einem der vorangehenden Ansprüche, **dadurch gekennzeichnet, dass** alle Rollen (8a bis 8e) drehbarer Bauart sind.

8. Zimmerservicewagen nach einem der vorangehenden Ansprüche, **dadurch gekennzeichnet, dass** die Aufbewahrungsmittel Regalbretter (11 bis 14) umfassen, die jeweils am öffnenden Abschnitt (3) und am starren Abschnitt (2) des Rahmens (1) derart befestigt sind, dass sie übereinander anordenbar sind, wenn der Behälter geschlossen ist.

9. Zimmerservicewagen nach Anspruch 8, **dadurch gekennzeichnet, dass** die Regalbretter (11 bis 14) eine vertikale Stütze (11a bis 14a) umfassen.

10. Zimmerservicewagen nach einem der Ansprüche 1 bis 7, **dadurch gekennzeichnet, dass** die Aufbewahrungsmittel im öffnenden Abschnitt (3) einen Wäschesackhalter (15) und ein niedriges Regalbrett (16) umfassen, und dadurch, dass der starre Abschnitt (2) Schwenkbehälter (16) und Boxen (17) aufnimmt.

11. Zimmerservicewagen nach einem der vorangehenden Ansprüche, **dadurch gekennzeichnet, dass** der Rahmen (1) Mittel zur Kopplung (20 bis 24; 28 bis 32) von zwei Wagen miteinander umfasst, um eine bewegbare Gruppe zu bilden.

12. Gruppe aus zwei Zimmerservicewagen nach Anspruch 11, **dadurch gekennzeichnet, dass** der Behälter eines ersten Wagens ausgebildet ist, um die saubere Wäsche aufzunehmen und der zweite Behälter ausgebildet ist, um die schmutzige Wäsche und/oder die Abfälle aufzunehmen.
